# EUROPEAN PATENT SPECIFICATION

(11) **EP 0 950 622 B1**
(45) Date of publication and mention of the grant of the patent: **12.06.2002**
(21) Application number: 99107134.1
(22) Date of filing: 13.04.1999
(51) Int. Cl.: B65D 88/32, B65G 69/04

(54) **Silo for storing and subsequently offloading, in a dosed manner on one or more transport vehicules, granular material**
Silo zum Lagern und nachfolgenden dosierten Abgaben in ein oder mehrere Transportfahrzeuge für körniges Material
Silo de stockage et ultérieurement de déchargement de manière dosée dans un ou plusieurs véhicules de produits granulaires

(30) Priority: 16.04.1998 IT BZ980016
(43) Date of publication of application: 20.10.1999
(73) Proprietor: Agristrade S.p.A., 39100 Bolzano (IT)
(72) Inventor: Marin, Silvano, 39100 Bolzano (IT)
(74) Representative: Frohwitter, Bernhard, Dipl.-Ing.

(56) References cited:
- EP-A- 0 628 459
- CH-A- 538 403
- DE-A- 1 481 284
- DE-A- 2 558 702
- DE-A- 4 406 552
- US-A- 1 468 647
- US-A- 3 656 663
- US-A- 4 200 208

## Description

The present invention relates to a silo for storing and subsequently off loading in a dosed manner on one or more transport vehicles granular material, in particular salt to be used to prevent the formation of ice on roads, according to the preamble of claim 1.

Such silos have in the past been distinguished by the presence of a tank with circular section, which was supported on a lattice structure so that it would be at a certain height from the ground and that it would be possible to position a transport vehicle underneath the tank and off load thereon a certain quantity of stored material through an appropriate discharge opening.

In the presence of large quantities of material to be stored these silos present tanks of considerable height, which adding to the necessary height from the ground of the tank causes an unpleasant environmental and visual impact.

More recently, to improve such impact a different type of silo has been developed, also known, which presents a tank with quadrangular cross section. In the presence of large quantities of material to be stored, the tank is extended in width rather than in height, thereby limiting its height and hence improving its environmental and visual impact. This tank is moreover housed on the first floor of a lattice structure externally covered to look like a normal building.

The outer walls of the tank are vertical and its bottom raises in its interior along a central band, in such a way as to form a sort of two-pitch roof which divides the tank in two chambers. The bottom of each chamber thus presents an outer part, horizontal and proximate to the external wall of the tank, and an inner part, inclined and constituted by one of the two pitches.

In the junction area between the horizontal bottom part and the inclined bottom part of each chamber, a plurality of passage openings is provided. These openings are positioned symmetrically to the two sides of the bottom wall shaped as a two pitch roof and lead to a rectangular discharge opening positioned underneath the bottom part shaped as a two pitch roof. Through the discharge opening, it is possible to off load the material onto the transport vehicles positioned in an underlying loading lane traversing the silo at the ground floor.

The extraction means comprise a plurality of rakes, actuated by double action pistons.

The rakes are positioned on the horizontal bottom of each chamber. Each of them is associated to a passage opening, whereto it feeds the material to be off loaded. Each rake slides in a forward and backward motion on the bottom of the tank. The rakes present a head with rectangular triangle cross section, which in the forward motion towards the external wall of the tank wedges into the stored material thanks to its inclined surface. In the subsequent return motion towards the passage opening the triangular section head drags, with it, thanks to its vertical plane surface, the material thereby carrying it through the opening.

As stated, the passage openings are positioned symmetrically. It is thus possible to actuate, with the same double action piston, the two rakes associated to two passage openings lying opposite, so that whilst a rake performs a forward motion the other performs a backward motion.

The double action pistons are positioned in the free space delimited at the top by the bottom part shaped as a two pitch roof and are located above the discharge opening. In this way the rakes are pushed by their forward motion and are pulled by their backward motion. For each pair of associated rakes, two double action pistons are provided, in order to eliminate any torsion moments on the rakes.

The material is off loaded as follows.

The transport vehicle is positioned underneath the discharge opening, which as stated is under the bottom part shaped as a two pitch roof and under the double action pistons. The double action pistons are actuated.

Each passage opening of a chamber is operatively associated to the opposite passage opening of the other chamber and the two respective rakes are actuated by the same double action pistons. Thus, whilst in one chamber the rake drags material towards its passage opening, the rake in the other chamber wedges into the material and moves to the position that will allow it in turn to drag material upon the subsequent return motion.

Correspondingly on the underlying transport vehicle material will be off loaded which for each pair of passage opening will alternatively have been made to go through one and the other passage opening, depending on which of the two rakes is performing a return motion.

With reference to the means for feeding such known silo, they comprise pressurised pipes with which the material is carried upwards to a diffuser located at the top of the tank. Said diffuser rotates by effect of a mechanical or hydraulic actuation and spreads the material into the tank from the top.

This known silo, however, presents several drawbacks.

It presents a single central loading lane for the transport vehicles, which lies underneath the bottom part shaped as a two pitch roof. Therein a maximum number of two transport vehicles can be accommodated, to that if the extraction and loading capacity of this silo were to be improved, it would be necessary to extend the tank longitudinally in an excessive manner or alternatively double the system by adding a second silo to the first.

Moreover, to off load the stored material, the material itself must be displaced, by means of the rakes, from the sides of the tank towards the centre where the passage openings and the discharge opening are located. This entails the need to install high powers. A further drawback consists of the fact that the moving parts under the material, such as the rakes and the support of the rakes to the double action piston, are not accessible. This makes maintenance or repairs very problematic when the silo is not empty.

Another drawback resides in the circumstance that the tank contains so-called dead zones, wherefrom the material cannot be extracted. Such a dead zone is constituted for instance by the peripheral band of the bottom, proximate to the side walls of the tank and with a size equal to that of the triangular head. From this band no material can be extracted, since when the triangular head of the rake impacts with its tip on the vertical wall, the vertical plane dragging surface behind cannot approach any further and hence it cannot carry material from this band of the bottom. A further drawback is constituted by the fact that during the feeding process the diffuser crumbles the material to be stored as an effect of its rotatory motion, thereby forming powders. These powders increase the possibility that the material will be packed, since as grain size decreases so does the sliding ability of the material.

Lastly an additional drawback pertains to the non hermetic nature of the tank. Air can flow into the tank every time a material extraction operation is performed, and specifically through the passage openings. However, for the material to retain its sliding ability, it is very important to prevent any contact with humidity.

The document US 1,468,647 refers to a silo for storing granular material, according to the preamble of claim 1. The discharge outlet or opening of each tapered pocket or feed box is able to be individually opened and respectively closed, independently of the discharge openings of the other feed boxes, through gates forming extracting means. The drawback of this silo resides in the fact that the gates or extracting means are manually actuated. A person should approach the gate (the extracting means) of a discharge outlet and open or close it, respectively. Such manual handling of the extracting means is dangerous for the operator and may not allow off-loading in a dosed manner, since the discharge opening is either completely open or completely closed.

The essential aim of the present invention is to overcome the aforementioned drawbacks by providing a silo, whereby it is possible to freely determine, according to specific needs, the number of transport vehicles to be loaded and whether such vehicles are to be loaded individually or simultaneously using one or more loading lanes. This must occur in the presence of an extraction of material from the silo that is reliable, uniform and free of dead zones.

Moreover, the power to be used for extraction must be minimal, and in any case far smaller than the power currently necessary. In this way, on one hand the activity of extracting the stored material is made more economical and on the other hand the installation of silos according to the present invention is enabled even in mountainous areas, where large quantities of electrical power are not available.

A further aim is to obtain a uniform feeding of the material into the tank, without compromising its physical characteristics. Simultaneously, it must further be guaranteed that the transport vehicle is loaded uniformly without having to be moved during the loading phase.

Lastly, an additional aim is make available a silo which allows a better utilisation of the space available in the building wherein the silo is contained.

These and other aims are all attained by a silo according to claim 1. Preferred embodiments and examples are indicated in dependent claims 2 to 15.

Further features and advantages of the invention shall be made more readily apparent from the content of the detailed description that follows of an embodiment provided purely by way of non limiting example in the accompanying drawings, wherein:
- Figure 1 shows a very schematic cross section of an embodiment of the silo, wherein the tank and the bottom of the tank with its feed box are visible,
- Figure 2 shows a horizontal section view, from the top, of the silo shown in Figure 1 and therein also the extraction means are visible,
- Figure 3 shows a very schematic longitudinal section of the silo shown in Figure 1, in the section is also visible a pressurised pipeline which is part of the feeding means and related to a first and a second embodiment of the pipeline,
- Figure 3c shows a very schematic longitudinal section of the silo shown in Figure 1, in the section is also visible a pressurised pipeline which is part of the feeding means and related to third embodiment of the pipeline,
- Figure 4 shows an axonometry view of an enlargement of Figure 2, wherein the extraction means are more clearly visible,
- Figure 5 shows a longitudinal section of the part of silo adjacent to the discharge opening of one of the feed boxes of the embodiment of the silo shown in the previous figures,
- Figure 6 shows a side view of a diffuser which also is part of the feeding means and a first embodiment of the pressurised pipeline, wherein shut off valves are positioned,
- Figure 6a shows a side view of a diffuser which also is part of the feeding means and a second embodiment of the pressurised pipeline, wherein are not positioned shut off valves but internal deflectors,
- Figure 7 shows a section of an enlargement of the second embodiment of the pressurised pipeline, wherein a deflector is recognised,
- Figure 10 shows a side view of a third embodiment of the diffuser,
- Figure 11 shows a top view on the diffuser shown in Figure 10,
- Figures 12 and 13 show an enlarged view of detail X of the Figures 10 and 11 respectively in longitudinal section and in top view,
- Figure 14 shows in enlarged scale the detail X of Figures 10 and 11 in longitudinal section with reference to a first embodiment of the braking means,
- Figures 15 and 16 show in enlarged scale the detail X of Figures 10 and 11 respectively in longitudinal section and in a top view with reference to a second embodiment of the braking means,
- Figure 17 shows in enlarged scale the detail X of the figures 10 and 11 in longitudinal section with reference to a third embodiment of the braking means.

The accompanying drawings show an embodiment of a silo for storing and for subsequently off loading in a dosed manner on one or more transport vehicles granular material, in particular salt to be used to prevent the formation of ice on the roads.

It comprises a tank 1 for the stored granular material, feeding means 2 to feed into the tank 1 the granular material to be stored and extraction means 3 to extract the granular material from the tank 1.

The tank 1 presents a quadrangular external perimeter and it is positioned on the first floor of a lattice structure 9 externally covered in such a way as to present the appearance of a normal building. The internal space of the building, at the ground floor, is used to position under the tank 1 transport vehicles, whereon the material stored in the tank 1 is loaded.

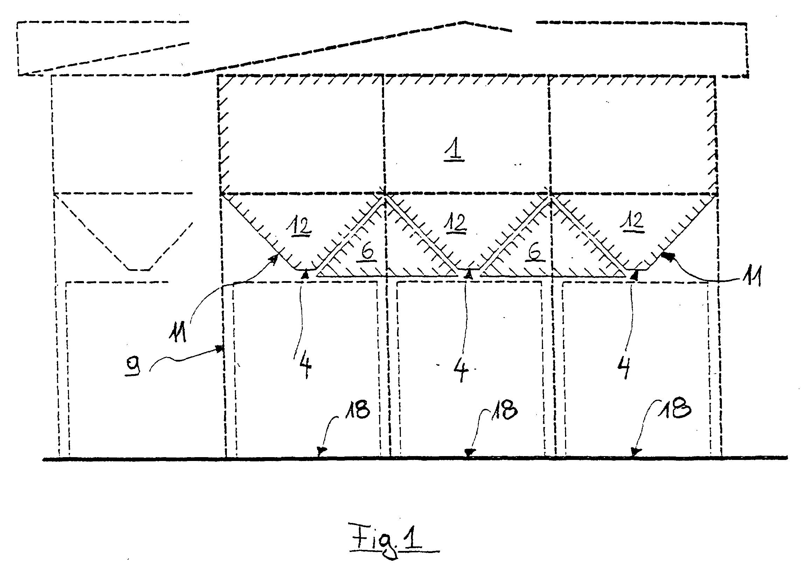

Figure 1 shows the related loading lanes 18, whereon the vehicles remain stationary during the loading operation.

The bottom 11 of the tank 1 comprises a plurality of feed boxes 12 positioned one next to the other in such a way as to be mutually aligned in multiple parallel rows. Each feed box 12 presents a discharge opening 4, preferably with elongated rectangular shape, through which it is possible to off load material onto an underlying transport vehicle. To each discharge opening 4 it is therefore possible to associate a transport vehicle, so that if necessary or desired it is possible simultaneously to load transport vehicles positioned in different loading lanes.

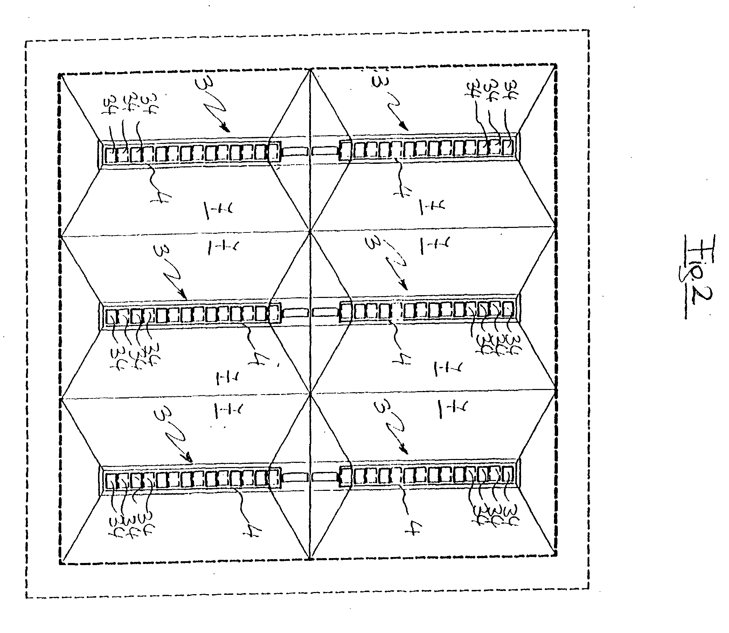

In Figure 2 are drawn, by way of example, six feed boxes 12, for three loading lanes 18 overall. The number of feed boxes 12 and hence also the number of the transport vehicles which can be loaded simultaneously can evidently be, depending on the requirements, different from the one shown by way of example, given the modular nature presented by the silo according to the present invention and which shall become fully apparent in the course of the present description.

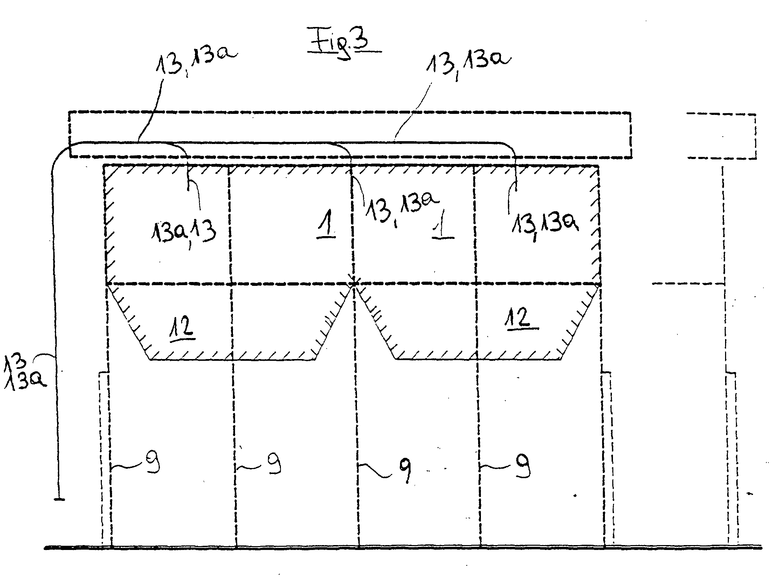

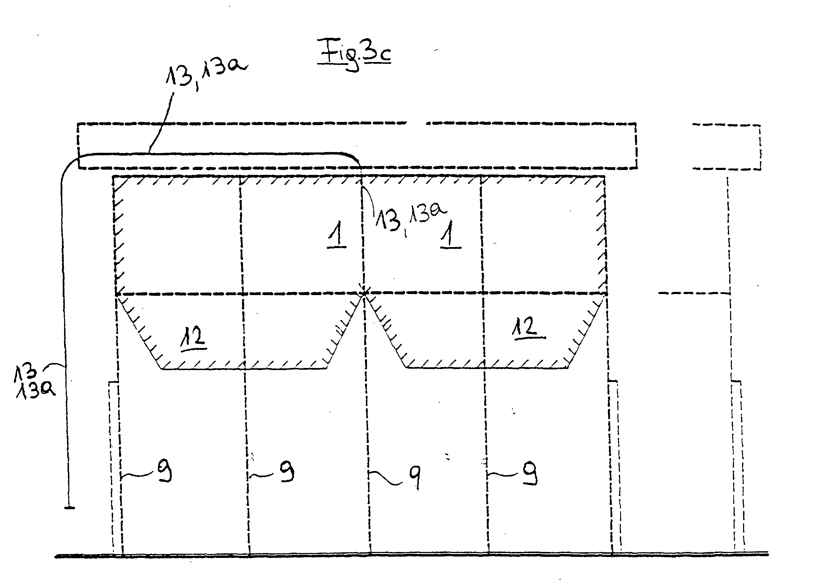

Each discharge opening 4 of each feed box 12 can be individually closed and respectively opened, independently of the discharge openings 4 of the other feed boxes 12, so that it is possible to load also a single transport vehicle at a time. For this purpose extracting means 3 are provided, which are constituted by a plurality of identical groups of elements 31, 32, 33, visible in Figure 4.

The number of this group of elements 31, 32, 33 is equal to the number of feed boxes 12 present, so that to each feed box 12 is associated one of these groups of elements 31, 32, 33. Each group of elements 31, 32, 33 comprises two plates, whereof one 31 is fixed and the other 32 is movable, and a means 33 for actuating the movable plate 32.

The two plates 31, 32 present holes 34 and are positioned one above the other. The fixed plate 31 is positioned stationary in the respective discharge opening 4 in such a way as to obstruct it and the movable plate 32 is supported in a translatable manner parallel to the fixed plate 31. In this way the movable plate 32 is able to assume, as a result of the action of the actuating means 33, a starting position, wherein the respective holes 34 of the two plates 31, 32 do not overlap even minimally, a plurality of intermediate positions, wherein the respective holes 34 of the two plates 31, 32 partially overlap and a final position, wherein the respective holes 34 of the two plates 31, 32 overlap completely.

In the starting position the respective holes 34 of the two plates 31, 32 do not create any section for the passage of the material and the discharge opening 4 is hermetically shut. In the final position the respective holes 34 of the two plates 31, 32 coincide, creating the maximum section for the passage of the material and the discharge opening 4 presents the maximum off loading capacity. In the intermediate positions there are intermediate passage sections, with which the discharge of the material through the discharge opening 4 can be dosed. The selection among these positions depends on the quantity of material to be loaded, on the grain size of the material to be loaded and also on the time available for the loading operation.

The material falls due to gravity as soon as a passage section is created by the superposition of the holes 4. Moreover, the feed boxes 12 present inclined surfaces 7 which lead the material towards the discharge opening 4, so that there are no dead zones wherefrom no material can be extracted.

Conveniently the actuating means 33 comprises a piston, hydraulically actuated and fastened at its free end to the associated movable plate 32. The piston 33 upon its extraction and its return translates the respective movable plate 32 between the aforesaid positions.

The power used for actuating the pistons is particularly reduced, especially with respect to that required for the operation of the prior art silo, since the excursion of the forward and backward motion of the movable plate 32 is not large and since the stresses which the movable plate 32 needs to overcome when moving are mostly oblique.

Moreover the actuating means 33 needs to be activated only at the beginning and at the end of the extraction means, to bring the movable plate 32 in position, and not during the entire extraction operation as is the case instead for the known silo. Hence, the stress and wear to which the pistons are subjected is considerably smaller, with undoubted advantages in terms of operating economies.

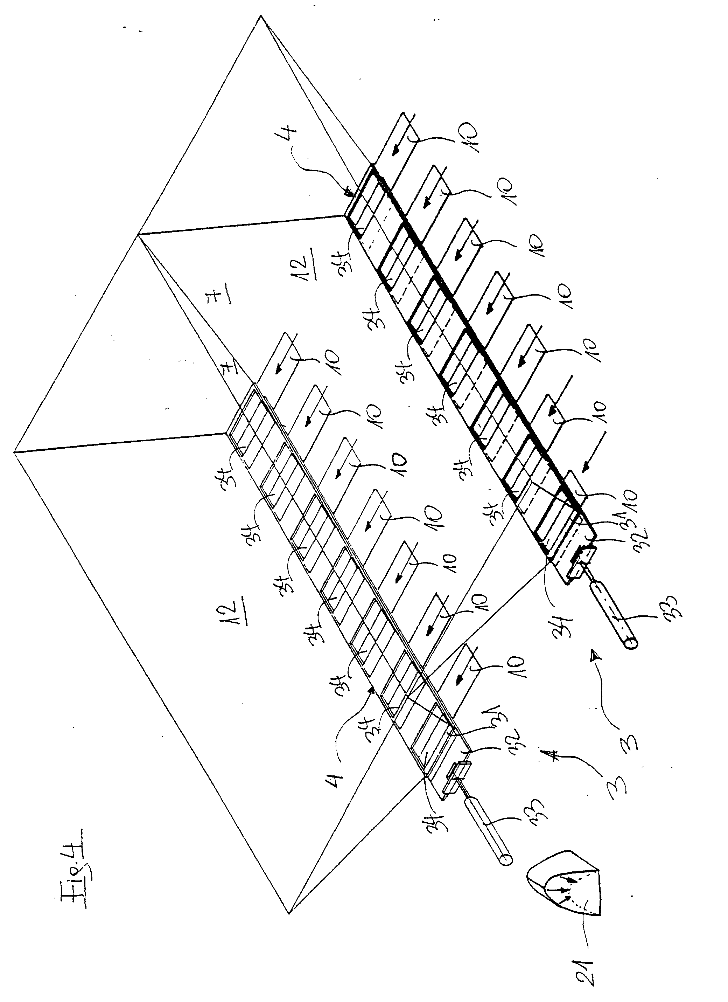

In Figure 4 a safety element, preferably a pressure accumulator, is schematically shown as 21. Such safety elements are known. Its purpose is to intervene in case of sudden electrical power outages, freeing the pressure accumulated therein and providing it to the piston 33 to place the movable plate 32 immediately in the closed position, i.e. in the position wherein the holes 34 of the two plates 31 and 32 do not overlap even minimally. In the absence of the pressure accumulator 21, the material would continue to flow out in case of an electrical power outage during an extraction operation. This solution is very simple and it is immediately effective. As Figure 5 shows, an auger 8 is conveniently positioned underneath the discharge opening 4 of the feed boxes 12 referring to a loading lane 18. The augers 8, whose number is equal to that of the loading lanes, project outside the building. It is thereby possible, if necessary, to transport the material exiting the discharge opening(s) 4 to a transport vehicle located outside the building, underneath the outlet of the auger 8.

Moreover, as Figure 4 shows, it is conveniently provided for each discharge opening 4 to be associated to a plurality of sectioning blades 10. These blades are manually actuated and each of them is individually movable in the direction of the arrows to a closed position wherein it obstructs the passage section of the discharge opening 4. Obviously, for the passage section of a discharge opening 4 to be totally closed it is necessary for all sectioning blades 10 of that discharge opening 4 to have been moved to their closed position. The function of these sectioning blades 10 is to allow, even in the presence of overlapping holes 34, i.e. with material flowing out or able to flow out, to act locally on the blades 31, 32, for instance to free holes 34 which may have become clogged.

Moreover in the presence of sectioning blades 10 of a discharge opening all placed in their closed position it is possible to disassemble the associated movable plate 32 for maintenance or repair purposes, even if the silo is full.

An additional function of the sectioning blades is to allow reducing the passage section of the discharge opening 4, adapting it to the dimensions of the smaller transport vehicles.

As Figures 1 and 2 show, the mutually adjacent inclined surfaces 7 of two adjacent feed boxes 12 delimit a space under the tank 1. Conveniently, in that space is positioned an additional tank 6 for storing liquid material, in particular saline solution to be used to prevent the formation of ice on the roads. This allows advantageously to exploit a free space and at the same time to position higher, on the first floor, these additional tanks, traditionally provided so far on the ground floor. In this way the entire ground floor is made available for the transit of the transport vehicles to be loaded. It is also possible to use the ground floor as a parking garage for the vehicles.

A further advantage consists of the fact that in case of electrical power outages it is nonetheless still possible to discharge by gravity the content of these additional tanks 6 onto transport vehicles, since the additional tanks are in a raised position and not on the ground. The feeding means 2 comprise pressurised pipelines 13 and respectively 13a. As Figures 3, 3c show, they allow to off load from above into the tank 1 the granular material injected into the pipelines at the ground floor and they can be branched so as to present several outlets, as shown in Figure 3, or present a single outlet, as shown in Figure 3c. The choice between the two possibilities also depends on the type of diffuser to be applied to their outlets.

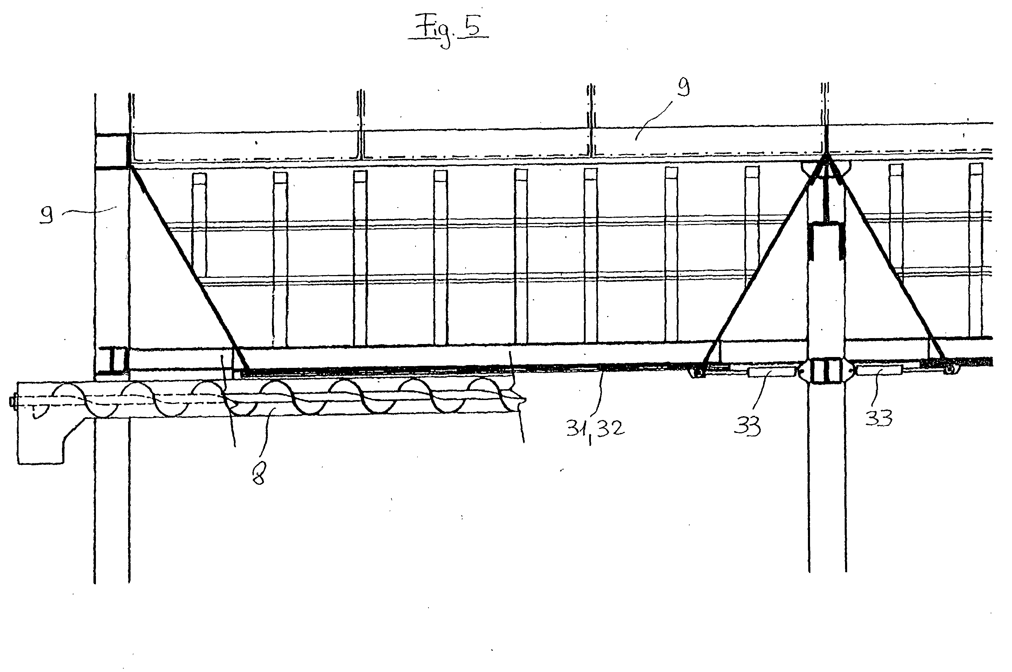

Figure 6 shows a first embodiment 13 of a pressurised pipeline, wherein shut-off valves 20 are positioned. By commanding the shut-off valves 20 it is possible to direct the flow of material towards a single outlet of the pressurised pipelines 13. At least one outlet is provided for each feed box 12.

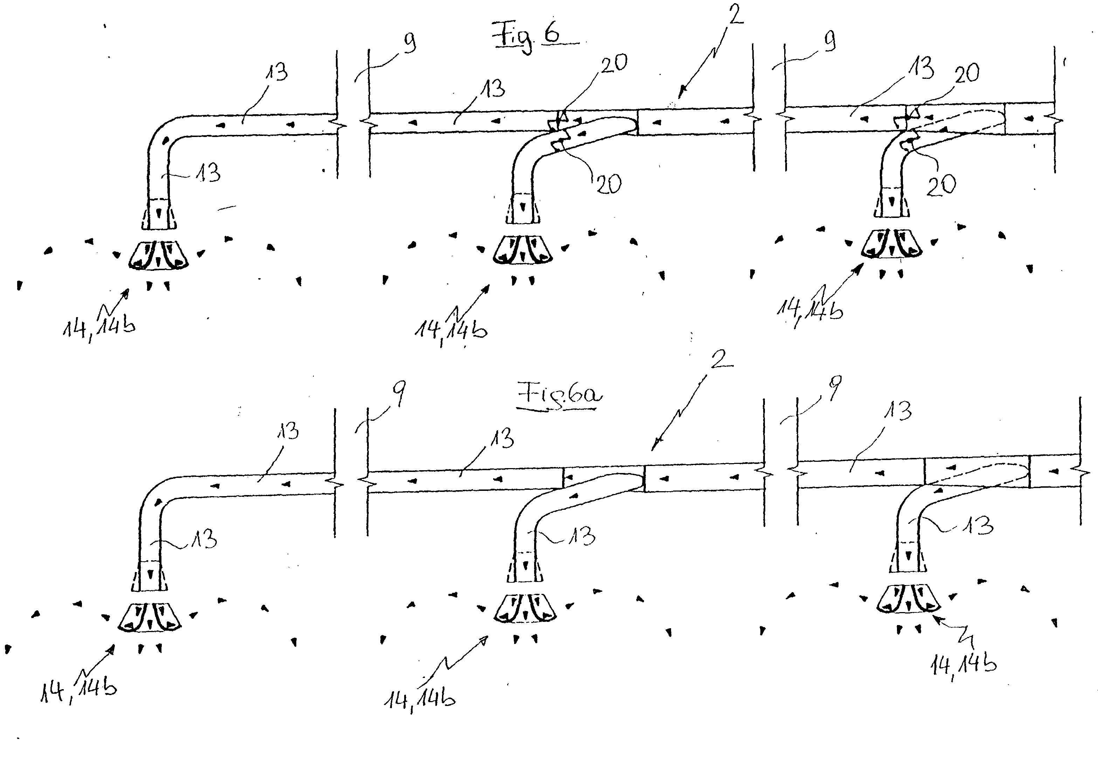

Figures 6a and 7 show a second embodiment 13a of a pressurised pipeline. It differs from the previous one in that it lacks shut-off valves 20. To convey material towards an outlet, baffles 19 are provided. A diffuser is provided at each outlet of the pressurised pipelines 13 and respectively 13a.

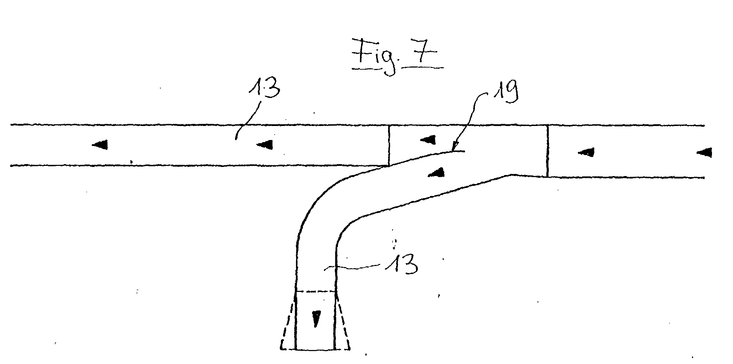

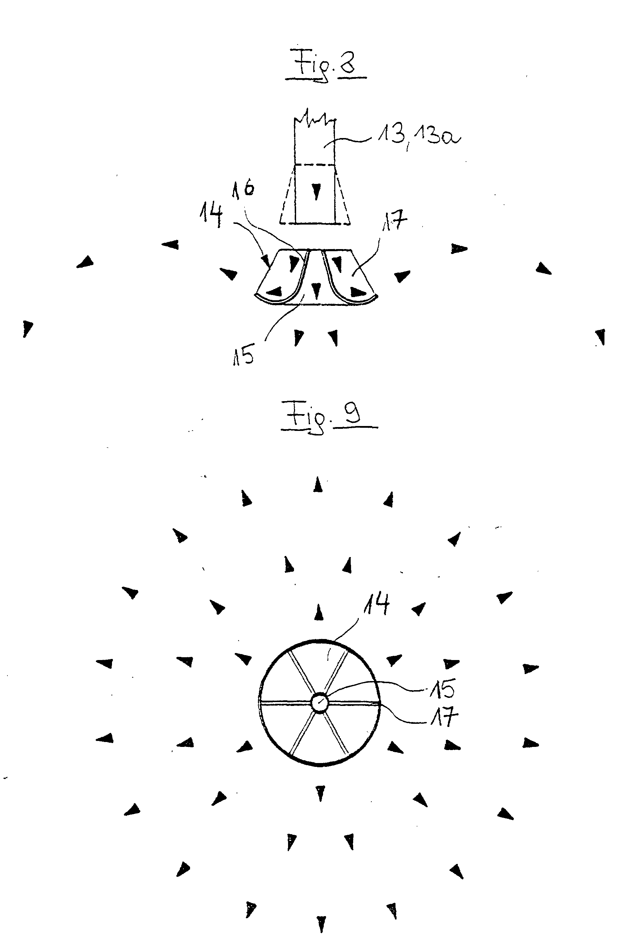

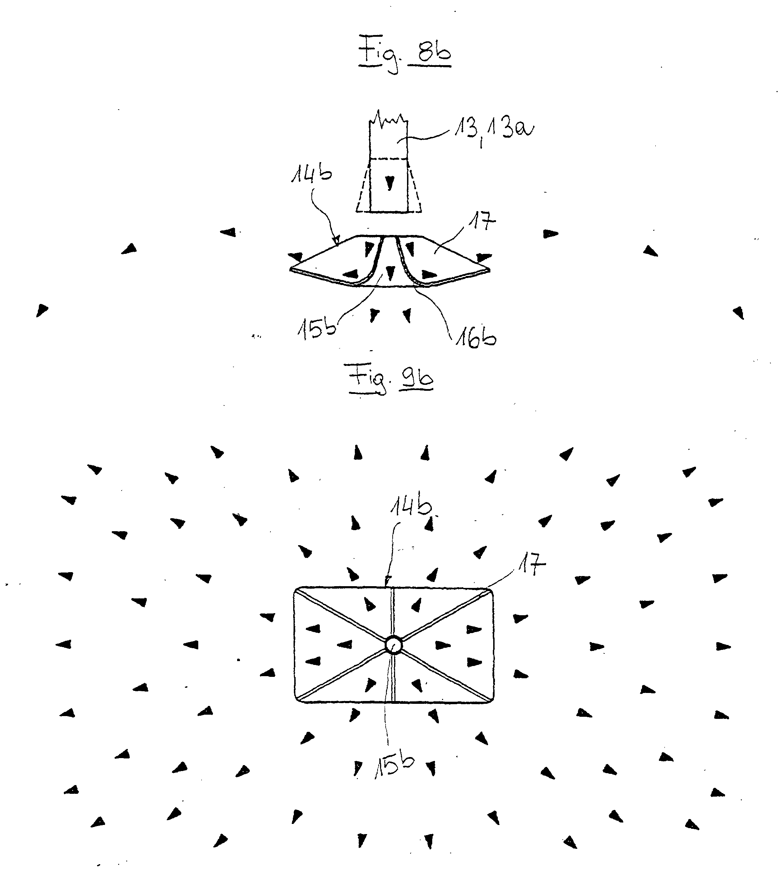

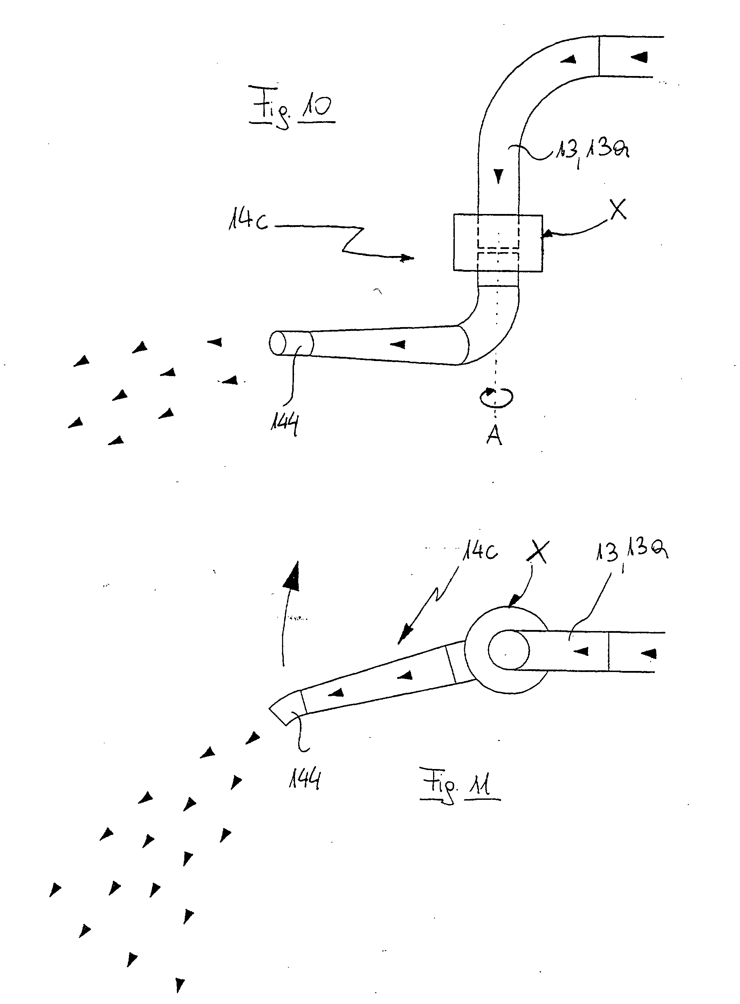

Figures 10 and 11 relate to diffusers 14c. The diffusers 14c are not fixed on the pressurised pipelines 13, 13a. The diffuser is supported to the pipeline 13;13a pivotingly around the longitudinal axis A thereof. According to the invention, the rotation of the diffuser 14c occurs without the aid of mechanical or hydraulic actuators and it is due to the thrust imparted by the granular material to the walls of the diffuser due to the shape of the diffuser. For this purposes the diffuser 14c comprises a tubular section presenting, in proximity with its free outlet extremity 144, a curvature in the plane that is perpendicular to the longitudinal plane of the pipeline 13; 13a. In this case when the granular material passes through, the curved wall of the diffuser 14c is subjected to a transverse component of the thrust of the material, which makes the diffuser 14c rotate around its pivoting support point on the pipeline, as Figures 10 and 11 show. The direction of rotation is away from the convex side. The energy saving with respect to prior art solutions is evident. To realise the rotation of the diffusers 14c and thereby obtain a uniform distribution of the granular material, the energy of the granular material in motion is exploited instead of using separate actuating means. Conveniently, the diffuser 14c is tapered towards the outlet end 144, in order to regulate and render more uniform the flow of the granular material in proximity to the curvature of the outlet end 144.

To support the diffuser 14c pivotingly to the pipeline 13, 13a, a ball bearing 40 is, for instance, provided.

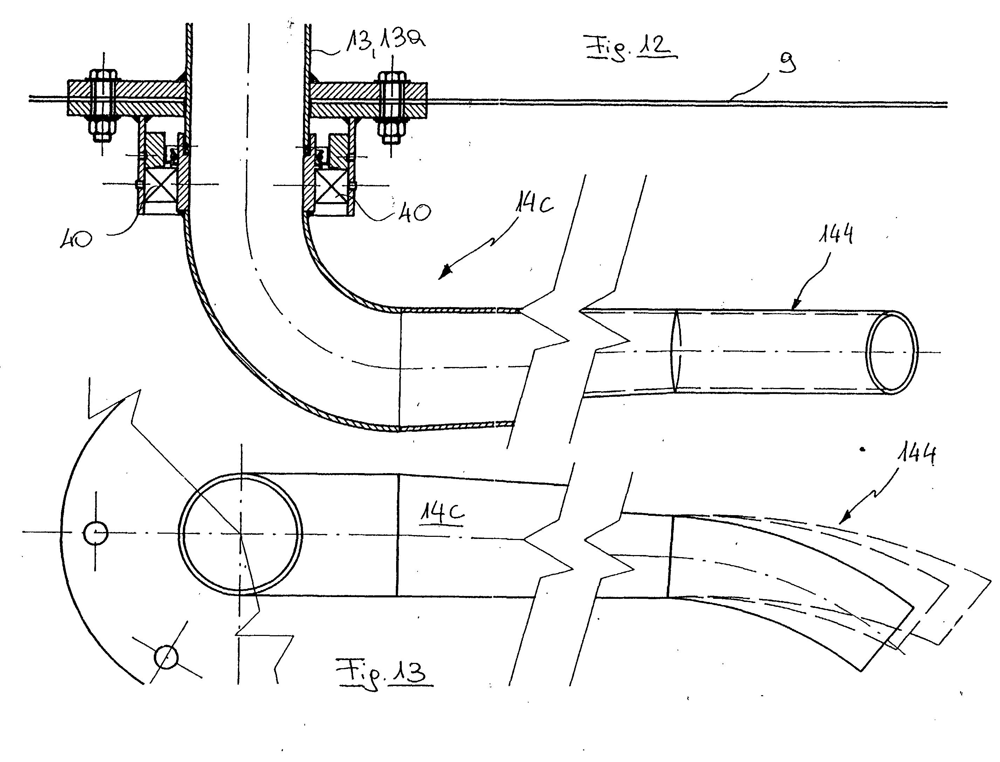

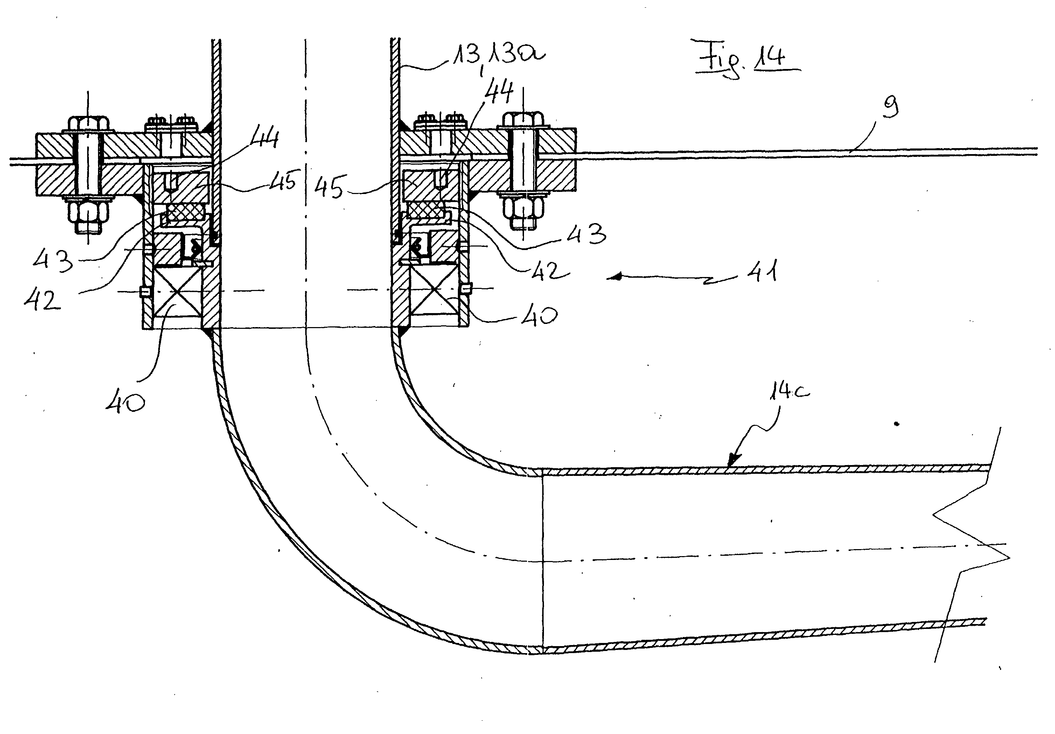

As stated, the very passage of the material through the diffuser 14c imparts the thrust that sets the diffuser 14c in rotatory motion, but since such thrust tends to accelerate the rotation of the diffuser 14c ever more, it is necessary to intervene to regulate rotation and prevent excessive rotational speeds from being reached. A first solution may consists of providing for the outlet end 144 to be in deformable rubber. As a consequence thereof, there is a self-regulating effect of the angular velocity. As illustrated in Figures 12 and 13, wherein the detail X of Figures 10 and 11 is shown enlarged, by effect of its deformability the outlet end 144 tends to straighten under the action of the centrifugal force generated by the rotation and since the curvature of the outlet end 144 is reduced, such straightening causes a simultaneous decrease in the thrust imparted by the material, which causes the rotation. The system thus reaches an equilibrium point wherein the diffuser 14c rotates at constant angular velocity.

To brake and regulate the angular velocity of the diffuser, however, specific braking means 41;51;61 can also be provided.

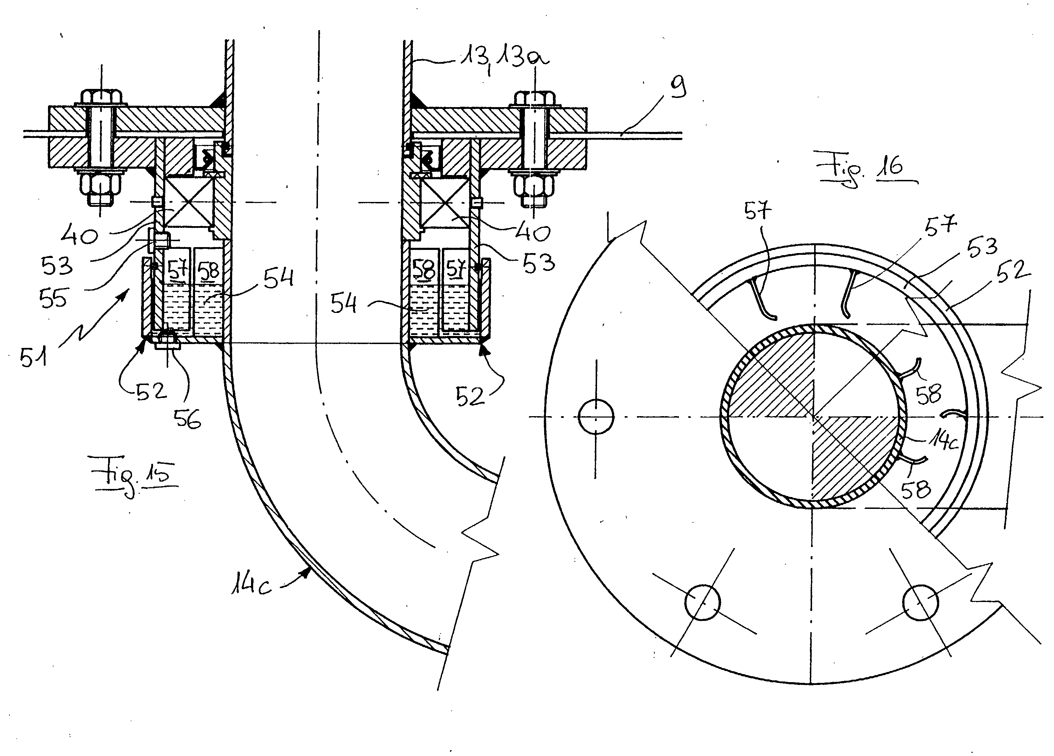

Figure 14 represents an enlargement of the detail X of the Figures 10 and 11, wherein a first embodiment 41 of the braking means is shown. To the wall of the diffuser 14c a shoulder 42 is fastened whereon bodies 43 made of teflon or similar material bear, which bodies thus rotate together with the diffuser 14c. Acting with a tool on the threaded gear ring 44 it is possible, by tightening it or loosening it, to press the blocks 45 onto the bodies 43. The friction thereby created contrasts the rotatory thrust and hence reduces the angular velocity of the diffuser 14c. This embodiment 41 of the braking means is distinguished for its considerable braking power, but its adjustment range is not particularly wide. As such it is suitable for sliding material with high specific weight.

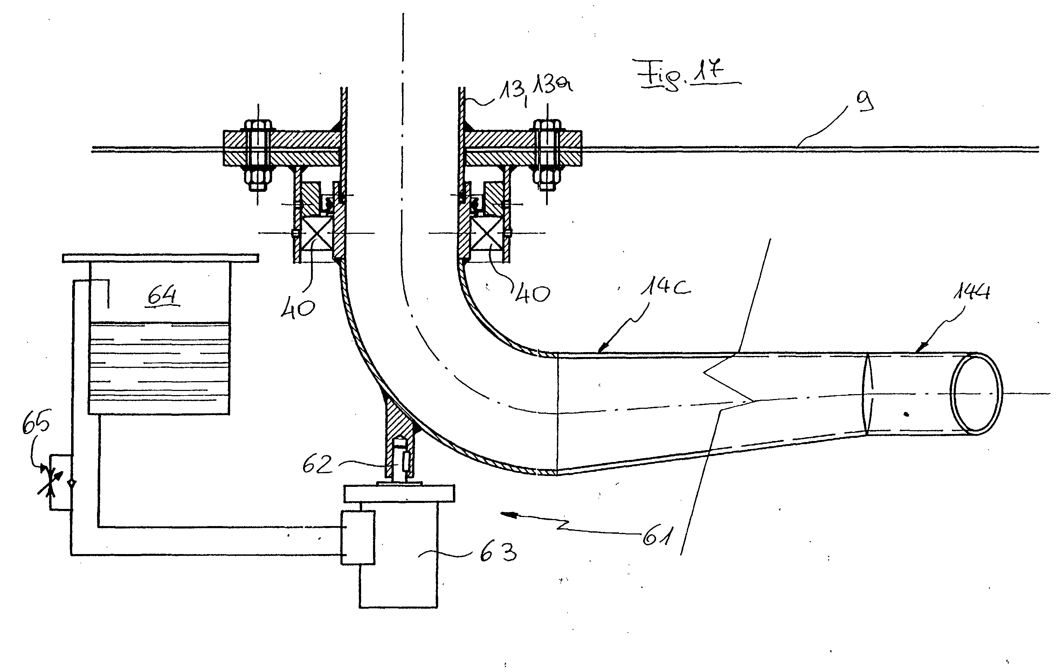

Figures 15 and 15 show an enlargement of the detail X of the Figures 10 and 11, wherein a second embodiment 51 of the braking means is shown. To the wall of the diffuser 14c is fastened in this case an element 52, with an L shaped cross section. This L shaped element 52 rotates together with the diffuser 14c and delimits together with the wall of the diffuser 14c and with a fixed cylinder 53 a tank 54, wherein a liquid, in particular oil, is contained.

The tank 54 can be filled or emptied by means of the loading and discharging openings 55 and 56. To the wall of the diffuser 14c are also fastened blades 58, whilst to the fixed cylinder 54 are fastened blades 57. Upon rotation of the diffuser 14c, the blades 58 tend to set in motion the oil contain in the tank 54 whereas the blades 57 tend to keep it still. This translates into a braking effect on the rotation of the diffuser 14c, whose intensity can be adjusted according to the viscosity and quantity of the oil as well as to the shape of the blades 57, 58 which may be either planar or curved.

Figure 17 shows an enlargement of the detail X of the Figures 10 and 11, wherein a third embodiment of the braking means 61 is shown. The diffuser 14c is connected to the shaft 62 of a hydraulic motor 63. The shaft 62 is set in rotatory motion by the diffuser 14c and thereby operates in reverse the hydraulic motor 63, which will draw oil from the tank 64 and subsequently will discharge it again in the tank 64. Providing a choke valve 65 on the discharge branch, recognisable by the presence of the check valve, an adjustable braking effect is obtained, which is transmitted through the shaft 62 to the diffuser 14c. This embodiment, in addition to having considerable braking power, guarantees a wider adjustment range and hence the possibility of having a fine adjustment.

The present invention attains its set aims. Obviously, in its practical embodiment it may also assume different forms and configurations from the one illustrated herein without thereby departing from the scope of the invention as described in the appended claims.

Moreover, all components can be replaced with technically equivalent elements and the forms, dimensions and materials employed may be any, depending on the needs.

## Claims

1. Silo for storing and subsequently off-loading granular material in a dosed manner on one or more transport vehicles, in particular off-loading salt to be used to prevent the formation of ice on roads, comprising:
- a tank (1) for storing the granular material,
- feeding means (2) to feed into the tank (1) the granular material to be stored,
- extracting means (3) to extract from the tank (1) the granular material to be off-loaded into the transport vehicles,
- the tank (1) comprising a plurality of feed boxes (12) positioned next to each other aligned in multiple parallel rows,
- each feed box (12) having a discharge opening (4) being able to be individually opened and closed, respectively, independently of the discharge openings (4) of the other feed boxes (12), through the extracting means (3),
**characterised in that**
- said extracting means (3) comprise holed plates (31, 32, 34) for defining a plurality of opening positions of each discharge opening (4), and **in that**
- the holed plates (31, 32, 34) comprise a plurality of holes (34) for adapting said discharge openings (4) to dimensions of said transport vehicles.

2. Silo according to claim 1, **characterized in that**
two of said holed plates (31, 32) which are positioned one above the other
and an actuation means (33) are comprised in a group of extraction elements (31, 32, 33)
so that one holed plate (31) is placed in a stationary manner in said discharge opening (4) in such a way as to obstruct it,
and the other holed plate (32) is supported in translatable manner parallel to said fixed plate (31),
and the actuation means (33) is able to displace the movable plate (32) with respect to the fixed one (31) in such a way that
the moveable plate (32) assumes a starting position, wherein the respective holes (34) of the two plates (31, 32) do not overlap even minimally, a plurality of intermediate positions, wherein the respective holes (34) of the two plates (31, 32) partially overlap and a final position, wherein the respective holes (34) of the two plates (31, 32) overlap completely;
and **characterized in that**
one group of a plurality of equal groups of said extraction elements (31, 32, 33) is operatively associated to the respective discharge opening (4) of each feed box (12),
so that the number of such groups of extraction elements (31, 32, 33) is equal to the number of feed boxes (12).

3. Silo according to claim 2, **characterised in that** the actuation means (33) comprises a piston (33), able to be actuated hydraulically and fastened at its free end to the respective movable plate (32), which upon its extension and contraction translates the respective movable plate (32) between the aforementioned positions (32).

4. Silo according to claim 3, **characterised in that** the piston (33) is associated to a safety element, preferably a pressure accumulator (21), which, in case of sudden electrical power outage, very rapidly provides the piston (33) with the pressure necessary to displace the movable plate (32) into the position wherein the holes (34) of the two plates (31, 32) do not overlap even minimally.

5. Silo according to claim 2 or 3, **characterised in that** below the openings (4) of each loading lane (18) an auger (8) is positioned, which ends outside the building.

6. Silo according to claim 2 or 3, **characterised in that** each discharge opening (4) is associated to a plurality of manually actuated sectioning blades (10), each whereof can individually be moved to a closed position wherein it partially obstructs the passage section of the discharge opening (4).

7. Silo according to claim 1, **characterised in that** in the space, present under the tank (1) and delimited by the mutually adjacent inclined surfaces (7) of two adjacent feed boxes (12), an additional tank (6) is positioned for storing liquid material, in particular saline solution to be used to prevent the formation of ice on roads.

8. Silo according to claim 1, **characterised in that** the feeding means (2) comprise pressurised pipelines (13;13a) with which the material is carried upwards and at least a diffuser (14c) connected thereto, **in that** the diffuser (14c) is supported to the pipeline (13;13a) pivotingly around the longitudinal axis (A) thereof and **in that** the rotation of the diffuser (14c) takes place without the aid of mechanical or hydraulic actuations and is due to the thrust imparted by the granular material on the walls of the diffuser (14c) because of its conformation.

9. Silo according to claim 8, **characterised in that** the diffuser (14c) comprises a tubular section presenting in proximity to its free outlet end (144) a curvature in the plane perpendicular to the longitudinal plane of the pipeline (13,13a).

10. Silo according to claim 9, **characterised in that** the diffuser 14c tapers towards the outlet end (144).

11. Silo according to one of the claims 9 or 10, **characterised in that** the outlet end (144) is made of deformable rubber.

12. Silo according to one of the claims 8 through 10, **characterised in that** to brake and regulate the angular velocity of the diffuser (14c) appropriate braking means (41;51;61) are provided.

13. Silo according to claim 12, **characterised in that** said braking means (41) comprise bodies (43) made of teflon or of a similar material positioned on a shoulder (42) fastened to the wall of the diffuser (14c) and blocks (45), which can be pressed with more or less force against the bodies (42) by loosening or tightening a threaded gear ring (44).

14. Silo according to claim 12, **characterised in that** said braking means (51) comprise an element (52) with an L shaped cross section fastened to the wall of the diffuser (14c) and a fixed cylinder (53), which delimit together with the wall of the diffuser (14c) a tank (54) wherein a liquid, in particular oil, is contained, to the wall of the diffuser (14c) being also fastened blades (58) and to the fixed cylinder (54) being fastened blades (57).

15. Silo according to claim 12, **characterised in that** said braking means (61) comprise a hydraulic motor (63) whose shaft is connected to the diffuser (14c) and is set in rotatory motion thereby, on the discharge branch of the hydraulic circuit connected to the hydraulic motor (63) being provided a choke valve (65).

## Patentansprüche

1. Silo zur Speicherung und zum anschließenden, dosierten Abladen von Granulat auf ein oder mehrere Transportfahrzeuge, insbesondere Abladen von Salz, das dazu dient, Eisbildung auf Straßen zu verhindern, umfassend:
- einen Tank (1) zur Speicherung des Granulats,
- eine Zuführeinrichtung (2), um das zu speichernde Granulat dem Tank (1) zuzuführen,
- eine Fördereinrichtung (3), um das in die Transportfahrzeuge abzuladende Granulat aus dem Tank (1) heraus zu fördern,
- wobei der Tank (1) mehrere Zuführkammern (12) enthält, die nebeneinander aufgereiht in mehreren parallelen Reihen liegen,
- wobei jede Zuführkammer (12) eine Entladeöffnung (4) aufweist, die durch die Fördereinrichtung (3) individuell geöffnet und geschlossen werden kann, unabhängig von den Entladeöffnungen (4) der anderen Zuführkammern (12),
**dadurch gekennzeichnet, daß**
- die Fördereinrichtung (3) Lochplatten (31, 32, 34) umfaßt, um eine Vielzahl von Öffnungsstellungen für jede Entladeöffnung (4) zu bestimmen, und dadurch daß
- die Lochplatten (31, 32, 34) mehrere Löcher (34) enthalten, um die Entladeöffnungen (4) an die Abmessungen der Transportfahrzeuge anzupassen.

2. Silo nach Anspruch 1, **dadurch gekennzeichnet, daß**
zwei dieser Lochplatten (31, 32), die übereinander liegen, und eine Betätigungseinrichtung (33) zu einer Gruppe von Förderelementen (31, 32, 33) gehören,
so daß eine Lochplatte (31) als stationäres Hindernis in der Entladeöffnung (4) angeordnet ist,
und die andere Lochplatte (32) parallel zu der festen Platte (31) verschiebbar gelagert ist,
und die Betätigungseinrichtung (33) befähigt ist, die bewegliche Platte (32) gegenüber der festen (31) zu verstellen, und zwar so daß,
die bewegliche Platte (32) eine Startposition einnimmt, in der sich die jeweiligen Löcher (34) der zwei Platten (31, 32) nicht im geringsten überlappen, eine Vielzahl von Zwischenpositionen einnimmt, in denen sich die jeweiligen Löcher (34) der zwei Platten (31, 32) teilweise überlappen, und eine Endposition einnimmt, in der sich die jeweiligen Löcher (34) der zwei Platten (31, 32) vollständig überlappen;
und **dadurch gekennzeichnet, daß**
eine Gruppe aus einer Vielzahl von gleichartigen Gruppen der besagten Förderelemente (31, 32, 33) in Wirkverbindung steht mit der zugehörigen Entladeöffnung (4) jeder Zuführkammer (12),
so daß die Anzahl solcher Gruppen von Förderelementen (31, 32, 33) gleich ist der Anzahl von Zuführkammern (12).

3. Silo nach Anspruch 2, **dadurch gekennzeichnet, daß** die Betätigungseinrichtung einen Kolben (33) umfaßt, der hydraulisch betätigt werden kann und mit seinem freien Ende an der zugehörigen beweglichen Platte (32) befestigt ist, und der aufgrund seiner Verlängerung und Verkürzung die jeweilige bewegliche Platte (32) zwischen den zuvor erwähnten Positionen verschiebt.

4. Silo nach Anspruch 3, **dadurch gekennzeichnet, daß** der Kolben (33) mit einem Sicherheitsteil, vorzugsweise einem Druckspeicher (21), verbunden ist, der im Falle eines plötzlichen Ausfalls der elektrischen Energie den Kolben (33) sehr schnell mit dem Druck versorgt, der notwendig ist, um die bewegliche Platte (32) in die Position zu bringen, in der die Löcher (34) der beiden Platten (31, 32) nicht im geringsten überlappen.

5. Silo nach Anspruch 2 oder 3, **dadurch gekennzeichnet, daß** unterhalb der Öffnungen (4) jeder Ladegasse (18) eine Förderschnecke (8) angebracht ist, die außerhalb des Gebäudes endet.

6. Silo nach Anspruch 2 oder 3, **dadurch gekennzeichnet, daß** jede Entladeöffnung (4) mit mehreren manuell betätigten Trennblättern (10) verbunden ist, von denen jedes individuell in eine Schließposition bewegt werden kann, in der es den Durchlaßabschnitt der Entladeöffnung (4) teilweise blockiert.

7. Silo nach Anspruch 1, **dadurch gekennzeichnet, daß** in einem Raum, der sich unter dem Tank (1) befindet und der von aneinander grenzenden, geneigten Flächen (7) zweier benachbarter Zuführkammern (12) begrenzt ist, ein zusätzlicher Tank (6) angebracht ist, um flüssiges Material zu speichern, insbesondere gelöstes Salz, das der Verhinderung der Eisbildung auf Straßen dient.

8. Silo nach Anspruch 1, **dadurch gekennzeichnet, daß** die Zuführeinrichtung (2) Druckleitungen (13; 13a), mit denen das Granulat nach oben gefördert wird, und mindestens einen hieran angeschlossenen Diffusor (14c) umfaßt, wobei der Diffusor (14c) um die Längsachse (A) drehbar an der Druckleitung (13; 13a) gelagert ist, und wobei die Drehung des Diffusors (14c) ohne Mitwirkung von mechanischen oder hydraulischen Betätigungen stattfindet und von dem Schub veranlaßt wird, der von dem Granulat auf die Flächen des Diffusors (14c) wegen dessen Formgebung ausgeübt wird.

9. Silo nach Anspruch 8, **dadurch gekennzeichnet, daß** der Diffusor (14c) einen rohrförmigen Abschnitt enthält, der nahe bei seinem freien Auslaßende (144) eine Krümmung bildet, die in einer Ebene senkrecht zu der Längsebene der Druckleitung (13, 13a) liegt.

10. Silo nach Anspruch 9, **dadurch gekennzeichnet, daß** der Diffusor (14c) sich in Richtung auf das Auslaßende (144) verjüngt.

11. Silo nach einem der Ansprüche 9 oder 10, **dadurch gekennzeichnet, daß** das Auslaßende (144) aus verformbarem Gummi hergestellt ist.

12. Silo nach einem der Ansprüche 8 bis 10, **dadurch gekennzeichnet, daß** eine Bremseinrichtung (41; 51; 61) vorgesehen ist, die sich für ein Bremsen und Regeln der Winkelgeschwindigkeit des Diffusors (14c) eignet.

13. Silo nach Anspruch 12, **dadurch gekennzeichnet, daß** die Bremseinrichtung (41) Schulterstücke (42, 43) und Blöcke (45) umfaßt, wobei die aus Teflon oder einem ähnlichen Material hergestellten Stücke (43) auf einer Schulter (42) angebracht ist, die an der Fläche des Diffusors (14c) befestigt ist, und wobei die Blöcke (45) mit mehr oder weniger Kraft gegen die Schulterstücke (42, 43) gepreßt werden können, indem ein Schraubgetriebering (44) gelockert oder angezogen wird.

14. Silo nach Anspruch 12, **dadurch gekennzeichnet, daß** die Bremseinrichtung (51) ein an der Fläche des Diffusors (14c) befestigtes Bauteil (52) mit L-förmigem Querschnitt und einen feststehenden Zylinder (53) umfaßt, die zusammen mit der Fläche des Diffusors (14c) einen Tank (54) einfassen, in dem eine Flüssigkeit, insbesondere Öl, enthalten ist, wobei auch an der Fläche des Diffusors (14c) Lamellen (58) befestigt sind und an dem feststehenden Zylinder (54) Lamellen (57) befestigt sind.

15. Silo nach Anspruch 12, **dadurch gekennzeichnet, daß** die Bremseinrichtung (61) einen hydraulischen Motor (63) umfaßt, dessen Welle mit dem Diffusor (14c) gekoppelt und dadurch in Drehbewegung versetzt wird, wobei auf der Ablaufseite des Hydraulikkreises, der mit dem Hydraulikmotor (62) verbunden ist, ein Drosselventil (65) vorgesehen ist.

## Revendications

1. Silo pour stocker puis décharger de manière dosée un matériau granulaire sur un ou plusieurs véhicules de transport, en particulier pour décharger du sel destiné à être utilisé pour empêcher la formation de verglas sur les routes, comprenant :
- un réservoir (1) pour stocker le matériau granulaire,
- un moyen de distribution (2) pour distribuer dans le réservoir (1) le matériau granulaire à stocker,
- un moyen d'extraction (3) pour extraire du réservoir (1) le matériau granulaire devant être déchargé dans les véhicules de transport,
- le réservoir (1) comprenant une pluralité de caissons de distribution (12) positionnés les uns à côté des autres en alignement en de multiples rangées parallèles,
- chaque caisson de distribution (12) comportant une ouverture de déversement (4) étant adaptée à être ouverte et fermée individuellement, respectivement, indépendamment des ouvertures de déversement (4) des autres caissons de distribution (12), via le moyen d'extraction (3),
**caractérisé en ce que**
- ledit moyen d'extraction (3) comprend des plaques trouées (31, 32, 34) pour définir une pluralité de positions d'ouverture de chaque ouverture de déversement (4), et **en ce que**
- les plaques trouées (31, 32, 34) comprennent une pluralité de trous (34) pour adapter lesdites ouvertures de déversement (4) aux dimensions desdits véhicules de transport.

2. Silo selon la revendication 1, **caractérisé en ce que**
deux desdites plaques trouées (31, 32) qui sont positionnées l'une au-dessus de l'autre
et un moyen d'actionnement (33) sont compris dans un groupe d'éléments d'extraction (31, 32, 33)
de manière qu'une plaque trouée (31) soit placée en une position fixe dans ladite ouverture de déversement (4) de manière à l'obstruer,
et l'autre plaque trouée (32) soit supportée de manière à pouvoir avoir un mouvement de translation parallèle relativement à ladite plaque fixe (31),
et le moyen d'actionnement (33) soit adapté à déplacer la plaque mobile (32) par rapport à la plaque fixe (31) de manière que
la plaque mobile (32) adopte une position initiale, dans laquelle les trous respectifs (34) des deux plaques (31, 32) ne se chevauchent pas, même de manière minimale, une pluralité de positions intermédiaires,. dans lesquelles les trous respectifs (34) des deux plaques (31, 32) se chevauchent en partie et une position finale, dans laquelle les trous respectifs (34) des deux plaques (31, 32) se chevauchent complètement ;
et **caractérisé en ce que**
un groupe d'une pluralité de groupes équivalents desdits éléments d'extraction (31, 32, 33) est associé en fonctionnement à l'ouverture de déversement respective (4) de chaque caisson de distribution (12),
de manière que le nombre de ces groupes d'éléments d'extraction (31, 32, 33) soit égal au nombre de caissons de distribution (12).

3. Silo selon la revendication 2, **caractérisé en ce que** le moyen d'actionnement (33) comprend un piston (33), adapté à être actionné hydrauliquement et fixé, à son extrémité libre, à la plaque mobile respective (32), qui lors de son déploiement et de sa rétraction, communique un mouvement de translation à la plaque mobile respective (32) entre les positions précitées (32).

4. Silo selon la revendication 3, **caractérisé en ce que** le piston (33) est associé à un élément de sécurité, de préférence un accumulateur de pression (21), qui, en cas de brusque coupure de courant, fournit très rapidement au piston (33) la pression nécessaire pour déplacer la plaque mobile (32) dans la position dans laquelle les trous (34) des deux plaques (31, 32) ne se chevauchent pas, même de manière minimale.

5. Silo selon la revendication 2 ou 3, **caractérisé en ce que** sous les ouvertures (4) de chaque voie de chargement (18) une vis sans fin (8) est positionnée, qui se termine à l'extérieur du bâtiment.

6. Silo selon la revendication 2 ou 3, **caractérisé en ce que** chaque ouverture de déversement (4) est associée à une pluralité de lames de sectionnement actionnées à la main (10), chacune pouvant être déplacée individuellement jusqu'à une position fermée dans laquelle elle obstrue en partie la section de passage de l'ouverture de déversement (4).

7. Silo selon la revendication 1, **caractérisé en ce que** dans l'espace, présent sous le réservoir (1) et délimité par les surfaces inclinées mutuellement adjacentes (7) de deux caissons de distribution adjacents (12), un réservoir supplémentaire (6) est positionné pour stocker un matériau liquide, en particulier une solution saline destinée à être utilisée pour empêcher la formation de verglas sur les routes.

8. Silo selon la revendication 1, **caractérisé en ce que** le moyen de distribution (2) comprend des conduites pressurisées (13 ; 13a) au moyen desquelles le matériau est transporté vers le haut et au moins un diffuseur (14c) qui y est relié, **en ce que** le diffuseur (14c) est supporté sur la conduite (13 ; 13a) en pivotement autour de l'axe longitudinal (A) de celle-ci et **en ce que** la rotation du diffuseur (14c) a lieu sans l'aide d'organes d'actionnement mécaniques ou hydrauliques et est due à la poussée du matériau granulaire sur les parois du diffuseur (14c) en raison de sa conformation.

9. Silo selon la revendication 8, **caractérisé en ce que** le diffuseur (14c) comprend une section tubulaire présentant, à proximité de son extrémité de sortie libre (144), une courbure dans le plan perpendiculaire au plan longitudinal de la conduite (13 ; 13a).

10. Silo selon la revendication 9, **caractérisé en ce que** le diffuseur (14c) va en se rétrécissant vers l'extrémité de sortie (144).

11. Silo selon l'une des revendications 9 ou 10, **caractérisé en ce que** l'extrémité de sortie (144) est constituée de caoutchouc déformable.

12. Silo selon l'une des revendications 8 à 10, **caractérisé en ce que** pour freiner et réguler la vitesse angulaire du diffuseur (14c) des moyens de freinage appropriés (41 ; 51 ; 61) sont prévus.

13. Silo selon la revendication 12, **caractérisé en ce que** ledit moyen de freinage (41) comprend des corps (43) constitués de Téflon ou d'un matériau similaire positionnés sur un épaulement (42) fixé à la paroi du diffuseur (14c) et des blocs (45) qui peuvent être pressés avec une force plus ou moins grande contre les corps (43) par serrage ou desserrage d'un anneau denté fileté (44).

14. Silo selon la revendication 12, **caractérisé en ce que** ledit moyen de freinage (51) comprend un élément (52) avec une section transversale en forme de L fixé à la paroi du diffuseur (14c) et un cylindre fixe (53), qui délimitent en association avec la paroi du diffuseur (14c) un réservoir (54) dans lequel un liquide, en particulier de l'huile, est contenu, des lames (58) étant également fixées à la paroi du diffuseur (14c) et des lames (57) étant fixées au cylindre fixe (54).

15. Silo selon la revendication 12, **caractérisé en ce que** lesdits moyens de freinage (61) comprennent un moteur hydraulique (63) dont l'arbre est relié au diffuseur (14c) et est entraîné en rotation par celui-ci, une vanne d'étranglement (65) étant ménagée sur l'embranchement de sortie du circuit hydraulique relié au moteur hydraulique (63).
